# EUROPEAN PATENT APPLICATION

(11) **EP 4 336 844 A1**
(43) Date of publication of application: **13.03.2024**
(21) Application number: 23196410.7
(22) Date of filing: 08.09.2023
(51) Int. Cl.: H04N 21/254, G06Q 20/12, G06Q 20/40, G06Q 30/0207, G06Q 30/06, H04L 9/00, H04N 21/4627, H04N 21/478, H04N 21/6334

(54) **SYSTEM AND METHOD FOR MANAGING SHARING OF MEDIA CONTENT**

(30) Priority: 08.09.2022 IN 202241051435
(71) Applicant: Tata Elxsi Limited, Bangalore 560048 (IN)
(72) Inventor: VISHWARAJU, CHANDRASEKHAR, 560048 Bangalore (IN); MANJUNATHA, ADITYA SATHYANARAYANA, 560048 Bangalore (IN)
(74) Representative: Finnegan Europe LLP

(57) **Abstract**

A content sharing management system and an associated method for allowing a subscriber of a media platform to share media content available on the media platform as a gift or as a recommendation to a non-subscriber of the media platform is provided. The content sharing management system allows the non-subscriber to pay and consume only a recommended media content rather than needing to pay a hefty yearly subscription fee, thus enabling significant cost savings. The content sharing management system increases a subscription revenue of the media platform, and provides the subscriber with incentives for sharing media content to the non-subscriber. The content sharing management system further ensures that only the non-subscriber who purchased a particular media content or to whom the media content is gifted can access the media content via an associated secured access link, and prevents other non-subscribers from accessing the media content via the secured access link.

## Description

Embodiments of the present specification relate generally to a content sharing system, and more particularly to a system that allows subscribers of a specific media platform to share media content as recommendations to non-subscribers of the specific media platform.

In recent times, the number of users subscribing to a media platform including an over-the-top (OTT) platform and a video-on-demand (VOD) platform is steadily increasing due to availability of high-speed internet connection at affordable prices. Examples of the media platform include Netflix, Hotstar, Amazon's Prime video, and YouTube premium. Conventionally, users pay a subscription fee and subscribe to the media platform for a selected subscription period, for example, for a period of one month, three months, or a for a year. Payment of subscription fees allows the subscribers to access all or predefined media content bundles available on the media platform for the selected subscription period.

Further, certain media platforms provide one or more options to the subscribers to share an invite link to their friends, family members, and colleagues who may not be existing subscribers of the media platform as recommendations. Using the invite link, such non-subscribers may download an application associated with the media platform and pay the subscription fee for accessing all media content available in the media platform for a selected subscription period.

However, the non-subscribers may be interested in watching only few selected media content available on the media platform. For example, certain non-subscribers may prefer to watch only movies, but may not be interested in watching television (TV) shows available on the media platform. Alternatively, certain non-subscribers may be interested in only certain exclusive content such as a cricket match available only on the specific media platform and not any other platforms. Currently, the media platforms fail to provide selective access to the media content to non-subscribers. In order to access even a few selected movies, sports matches, or an exclusive media content once, the non-subscribers need to subscribe to the media platform or a predefined media content bundle and pay a hefty monthly or yearly subscription fee applicable for content bundles that they may not watch at all. Therefore, media content recommendations from subscribers to non-subscribers are often ignored and do not result in acquisition of new subscribers by the media platform.

Accordingly, there remains a need for an improved content sharing system that allows non-subscribers of the media platform to pay for a one-time or limited access to only the recommended media content rather than needing to pay a hefty yearly or monthly subscription fee. Additionally, there is a need for an improved content sharing system that incentivizes sharing of curated media content by subscribers to non-subscribers for potential acquisition of new subscribers for the media platform.

### BRIEF DESCRIPTION

It is an objective of the present disclosure to provide a method for sharing media content. The method includes receiving metadata of the media content, to be shared from a subscriber device belonging to a subscriber of a media platform to a non-subscriber device belonging to a non-subscriber of the media platform, by a blockchain-based access management system. The received metadata of the media content includes a secured access link of the media content. Further, the method includes generating a non-subscriber user account for the non-subscriber and storing the generated non-subscriber user account in each of a plurality of blockchain nodes, and adding the received metadata including the secured access link of the media content to the generated non-subscriber user account. Furthermore, the method includes receiving a payment receipt by the blockchain-based access management system from one of the subscriber device and the non-subscriber device. The received payment receipt indicates a success or failure of a payment made by one of the subscriber and the non-subscriber for the media content. In addition, the method includes sharing the secured access link of the media content to the non-subscriber device only when the plurality of blockchain nodes verify that the payment status associated with the media content is successful.

Moreover, the method includes providing a first confirmation from the blockchain-based access management system to the media platform that the non-subscriber is a valid user registered with the blockchain-based access management system when the non-subscriber attempts to access the media content via the secured access link shared to the non-subscriber device. The method further includes providing a second confirmation from the blockchain-based access management system to the media platform that the payment status that is associated with the media content and that is stored in the non-subscriber user account is successful. Further, the method includes streaming the media content from the media platform to the non-subscriber device only upon receiving both the first confirmation and the second confirmation from the blockchain-based access management system. Furthermore, the method includes sharing of the media content from the subscriber device to the non-subscriber device includes sharing of the media content as one or more of a recommendation and a gift. Sharing of the media content as the recommendation from the subscriber device to the non-subscriber device includes obtaining the metadata of the media content from a subscriber management system in the media platform by a media application in the subscriber device. The metadata of the media content obtained from the subscriber management system includes one or more of a thumbnail, a unique identifier, the secured access link, a short description, and cast and crew data of the media content.

Further the method includes generating and transmitting a notification message including the short description of the media content and a link to download a lightweight application from the subscriber device to the non-subscriber device via a communications link. The lightweight application corresponds to a lite version of the media application residing in the subscriber device. Furthermore, the method includes transmitting the metadata of the media content that is shared to the non-subscriber device as the recommendation, a unique identifier of the non-subscriber device, a unique identifier of the subscriber device from the subscriber device to the blockchain-based access management system. In addition, the method includes generating the non-subscriber user account for the non-subscriber with the blockchain-based access management system based on login credentials input by the non-subscriber via the lightweight application downloaded from an application store to the non-subscriber device. Moreover, the method includes storing the generated non-subscriber user account in each of the plurality of blockchain nodes in the blockchain-based access management system, and generating a transaction message by the blockchain-based access management system. The generated transaction message includes the metadata of the media content, the unique identifier of the non-subscriber device, and the unique identifier of the subscriber device. Further, the method includes storing the generated transaction message in the non-subscriber user account generated for the non-subscriber of the media platform, and receiving the payment receipt from the non-subscriber device by the blockchain-based access management system. The received payment receipt includes the unique identifier of the media content for which the payment is made by the non-subscriber and a payment status indicating the success or the failure of the payment made by the non-subscriber.

Furthermore, the method includes transmitting the secured access link from the blockchain-based access management system to the non-subscriber device only when one or more of the plurality of blockchain nodes verify the payment status as successful for enabling the non-subscriber to access the media content available on the media platform via the secured access link. The secured access link allows only one non-subscriber who is associated with the non-subscriber device, is registered with the blockchain-based access management system and has made the payment for the media content to access the media content using the secured access link. Sharing of the media content as the gift from the subscriber device to the non-subscriber device includes providing a payment link, generated by a payment system communicatively coupled to the media platform, to the subscriber via a user interface screen of a media application residing in the subscriber device for enabling the subscriber to make the payment for the media content to be shared as the gift to the non-subscriber device. Further, the method includes obtaining the metadata of the media content from a subscriber management system in the media platform by the media application in the subscriber device when a payment status of the payment made by the subscriber is successful. The obtained metadata includes one or more of a thumbnail, a unique identifier, the secured access link, a short description, and cast and crew data of the media content.

Furthermore, the method includes generating and transmitting a transaction message including the metadata of the media content, a unique identifier of the non-subscriber device, a unique identifier of the subscriber device, and the payment status indicating a success of the payment made for the media content by the subscriber from the subscriber device to the blockchain-based access management system. In addition, the method includes generating the non-subscriber user account for the non-subscriber with the blockchain-based access management system based on the unique identifier of the non-subscriber device received from the subscriber device, and storing the generated non-subscriber user account in each of the plurality of blockchain nodes in the blockchain-based access management system. Moreover, the method includes verifying if the payment status in the transaction message indicating the success of the payment made for the media content by the subscriber by the plurality of blockchain nodes in the blockchain-based access management system. Further, the method includes generating and transmitting an acknowledgement message from the blockchain-based access management system to the subscriber device when one or more of the plurality of blockchain nodes verify the payment status as success. The acknowledgement message confirms creation of the non-subscriber user account for the non-subscriber with the blockchain-based access management system.

Furthermore, the method includes generating and transmitting a gift notification from the subscriber device to the non-subscriber device via a communications link upon receiving the acknowledgement message from the blockchain-based access management system. The gift notification transmitted to the non-subscriber device includes one or more of a link to download a lightweight application corresponding to a lite version of the media application in the subscriber device and the secured access link of the media content for enabling the non-subscriber to access the media content available on the media platform via the secured access link. The secured access link allows only one non-subscriber who is associated with the non-subscriber device, is registered with the blockchain-based access management system, and is gifted with the media content to access the media content using the secured access link. Sharing of the media content as one or more of the recommendation and the gift from the subscriber device to the non-subscriber device includes transmitting the unique identifier of the non-subscriber device from the non-subscriber device to the media platform when the non-subscriber selects the secured access link of the media content that is received as one or more of the recommendation and the gift from the subscriber device. The method further includes sharing the unique identifier of the non-subscriber device with the blockchain-based access management system from the media platform to verify if the unique identifier of the non-subscriber device is tagged to any of a plurality of registered non-subscriber user accounts stored in the plurality of blockchain nodes. Furthermore, the method includes transmitting the first confirmation to the media platform that the non-subscriber is the valid user registered with the blockchain-based access management system when any one of the registered non-subscriber user accounts is tagged with the unique identifier of the non-subscriber device. In addition, the method includes verifying if the payment status related to the media content stored in a specific registered non-subscriber user account that is tagged with the contact number of the non-subscriber is successful by the plurality of blockchain nodes in the blockchain-based access management system.

Moreover, the method includes transmitting the second confirmation from the blockchain-based access management system to the media platform that the payment status is successful when one or more of the plurality of blockchain nodes in the blockchain-based access management system identify that the payment status related to the media content stored in the specific non-subscriber account is successful. Sharing of the media content as one or more of the recommendation and the gift from the subscriber device to the non-subscriber device includes retrieving a smart contract, associated with the media content, stored in each of the plurality of blockchain nodes. Further, method includes identifying one or more contractual clauses associated with usage of the media content.

The one or more identified contractual clauses define one or more geographical regions where streaming of the media content is allowed, a particular period till which an access to the media content is to be provided to the non-subscriber of the media platform, and a number of streaming instances allowed from the media platform to the non-subscriber device. Furthermore, the method includes identifying a geographical region of the non-subscriber by the plurality of blockchain nodes based on a unique identifier of the non-subscriber device received from the subscriber device. The unique identifier of the non-subscriber device corresponds to a contact number of the non-subscriber including a country code. In addition, the method includes providing a payment link, generated by a payment system communicatively coupled to the media platform, to one or more of the subscriber and the non-subscriber for making the payment for the media content only when the geographical region of the non-subscriber corresponds to one of the allowed geographical regions identified from the smart contract. Moreover, the method includes generating and presenting a list of media content that are allowed to be streamed in the geographical region of the non-subscriber on a display unit of the subscriber device when the geographical region of the non-subscriber is different from the allowed geographical regions identified from the smart contract. The list of media content presented on the display unit enables the non-subscriber to select and share a specific media content from the list of media content to the non-subscriber of the media platform. Further, the method includes transmitting the particular period till which the access to the media content is to be provided to the non-subscriber and the maximum number of streaming instances allowed that are identified from the smart contract from the blockchain-based access management system to the media platform. Furthermore, the method includes preventing a subsequent streaming of the media content from the media platform to the non-subscriber device after expiry of the particular period till which the access to the media content is to be provided to the non-subscriber or when a number of times that the media content is streamed to the non-subscriber device is equivalent to the maximum number of streaming instances allowed for the media content.

Sharing of the media content as one or more of the recommendation and the gift from the subscriber device to the non-subscriber device includes adding an incentive including a particular number of blockchain based tokens to an incentive account of the subscriber that is stored in the media platform for sharing the media content to the non-subscriber. The particular number of blockchain based tokens added to the incentive account is determined based on a subscription fee of the media content that is one of gifted to the non-subscriber and recommended to the non-subscriber and subsequently purchased by the non-subscriber. Further, the method includes enabling the subscriber to redeem a number of blockchain based tokens remaining in the incentive account via a media application that resides in the subscriber device. The media application allows the subscriber to use the blockchain based tokens remaining in the incentive account to one or more of extend a current subscription plan for an additional period of time and purchase a product from an electronic commerce platform. Streaming of the media content from the media platform to the non-subscriber device includes transmitting a promotional message from the media platform to a contact number of the non-subscriber device. The promotional message includes details of one or more of an incentive, an offer, and a discount that the non-subscriber would receive upon upgrading himself or herself as a full-time subscriber of the media platform.

It is another objective of the present disclosure to provide a content sharing management system. The content sharing management system includes an incentive system and a blockchain-based access management system. The incentive system is communicatively coupled to one or more of a media platform, a payment system, and a subscriber device via a communications link. The subscriber device includes a media application that allows a subscriber of the media platform to select a particular media content from a plurality of media content available on the media platform and to subsequently share the selected media content as one or more of a recommendation and a gift to a non-subscriber of the media platform. The incentive system provides one or more types of incentives to the subscriber in return for sharing the selected media content with non-subscribers of the media platform. The blockchain-based access management system is communicatively coupled to the media platform, the payment system, and the subscriber device via the communications link. The blockchain-based access management system includes a plurality of blockchain nodes. The blockchain-based access management system receives metadata of the selected media content from the subscriber device. The received metadata of the selected media content includes a secured access link of the selected media content.

Further, the blockchain-based access management system generates a non-subscriber user account for the non-subscriber and stores the generated non-subscriber user account in each of the plurality of blockchain nodes, and adds the received metadata including the access link of the selected media content to the generated non-subscriber user account. Furthermore, the blockchain-based access management system receives a payment receipt from one of the subscriber device and a non-subscriber device associated with the non-subscriber of the media platform. The received payment receipt indicates a success or failure of a payment made by one of the subscriber and the non-subscriber for the selected media content using the payment system. In addition, the blockchain-based access management system shares the secured access link of the selected media content to the non-subscriber device only when the plurality of blockchain nodes verify that the payment status associated with the selected media content is successful. Moreover, the blockchain-based access management system provides a first confirmation to the media platform that the non-subscriber is a valid user registered with the blockchain-based access management system when the non-subscriber attempts to access the selected media content via the secured access link shared to the non-subscriber device. Further, the blockchain-based access management system provides a second confirmation to the media platform that the payment status that is associated with the selected media content and that is stored in the non-subscriber user account is successful. The media platform streams the selected media content to the non-subscriber device only upon receiving both the first confirmation and the second confirmation from the blockchain-based access management system. Furthermore, the blockchain-based access management system enables the media platform to add an incentive to an incentive account of the subscriber stored in the media platform for sharing the selected media content as one or more of the recommendation and the gift to the non-subscriber.

The blockchain-based access management system is integrated and implemented as part of the media platform. The blockchain-based access management system is implemented as a standalone system that simultaneously interacts with a plurality of media platforms and with a plurality of associated subscriber and non-subscriber devices for enabling subscribers to share the media content to non-subscribers, incentivizing subscribers, and for allowing only valid registered non-subscribers to consume the shared media content. The media platform includes one or more of an over-the-top platform, a video-on-demand platform, a stock trading platform, an electronic commerce platform, a ticket booking platform, a hotel booking platform, a local business establishment aggregator platform, and a metaverse platform.

### BRIEF DESCRIPTION OF DRAWINGS

These and other features, aspects, and advantages of the claimed subject matter will become better understood when the following detailed description is read with reference to the accompanying drawings in which like characters represent like parts throughout the drawings, wherein:
FIG. 1 illustrates a block diagram depicting an exemplary content sharing management system that allows a subscriber of a media platform to share media content available on the media platform with a non-subscriber of the media platform, in accordance with aspects of the present disclosure;
FIG. 2 illustrates a block diagram depicting exemplary steps for sharing a particular media content as a recommendation from a subscriber device to a non-subscriber device, in accordance with aspects of the present disclosure;
FIG. 3 illustrates a flow diagram depicting an exemplary method for generating and transmitting a notification message including a recommendation for a video from the subscriber device to the non-subscriber device using the content sharing management system of FIG. 1, in accordance with aspects of the present disclosure;
FIG. 4A illustrates an exemplary user interface screen of a media application residing in the subscriber device depicting a particular video selected by the subscriber for sharing as a recommendation with the non-subscriber of the media platform using the content sharing management system of FIG. 1, in accordance with aspects of the present disclosure;
FIG. 4B illustrates another exemplary user interface screen of the media application depicting a set of subscriber contacts displayed on a display screen of the subscriber device for enabling the subscriber to select a particular contact and share a recommendation for the video with the particular contact using the content sharing management system of FIG. 1, in accordance with aspects of the present disclosure;
FIG. 4C illustrates a user interface view depicting a notification message that notifies details of the video shared by the subscriber to the non-subscriber, in accordance with aspects of the present disclosure;
FIGS. 5A-B illustrate a flow diagram depicting an exemplary method for receiving an access link of the video at the non-subscriber device from a blockchain-based access management system associated with the content sharing management system of FIG. 1, in accordance with aspects of the present disclosure;
FIG. 6 illustrates an exemplary transaction message that is stored in a user account of the non-subscriber, in accordance with aspects of the present disclosure;
FIG. 7 illustrates an exemplary user interface view depicting a list of videos including the video shared by the subscriber displayed to the non-subscriber upon logging into a lightweight application downloaded to the non-subscriber device, in accordance with aspects of the present disclosure;
FIG. 7B illustrates a user interface view depicting a payment link provided to the non-subscriber via a user interface screen of the lightweight application for enabling the non-subscriber to purchase the video recommended by the subscriber, in accordance with aspects of the present disclosure;
FIG. 8 illustrates a flow diagram depicting an exemplary method for allowing only the non-subscriber to access the video using the access link received at the non-subscriber device from the blockchain-based access management system, in accordance with aspects of the present disclosure; and
FIG. 9 illustrates a flow diagram depicting an exemplary method for recording certain exemplary incentives issued to the subscriber by an incentive system associated with the media platform for sharing one or more videos as recommendations or as gifts to one or more non-subscribers and updating the recorded incentives upon redeeming at least a subset of the incentives, in accordance with aspects of the present disclosure.

### DETAILED DESCRIPTION

The following description presents an exemplary content sharing management system. Particularly, embodiments described herein disclose a content sharing management system that allows subscribers of a media platform to share media content as one or more of recommendations or gifts to non-subscribers of the media platform. As noted previously, a conventional media platform such as an OTT platform and a VOD platform allow their subscribers to share an invite link to their friends and family who may not be existing subscribers of the media platform.

The non-subscribers, thus invited to the media platform, may be interested in watching only a specific media content once or a selected media content bundle available on the media platform. In order to access the specific media content that is of interest to the non-subscribers, the non-subscribers need to subscribe to the media platform and pay a hefty monthly or yearly subscription fee, which results in the non-subscriber choosing to not subscribe to the media platform, thereby resulting in loss of revenue and lack of acquisition of several new subscribers.

In contrast to such conventional media platforms, the present content sharing management system allows the non-subscribers to pay only for their preferred media content available on the media platform. Specifically, the content sharing management system enables the subscribers to share media content as recommendations or gifts to the non-subscribers. Upon receiving recommendations from the subscribers, the present content sharing management system allows the non-subscribers to pay only for the recommended media content rather than needing to pay the hefty monthly or yearly subscription fee, and consume only the recommended media content, thus enabling significant cost savings.

Thus, the content sharing management system increases subscription revenue of the media platform with an increase in the number of non-subscribers consuming selected media content available on the media platform. The content sharing management system further increases the revenue of the media platform when the non-subscribers upgrade themselves as full-time subscribers.

Additionally, the content sharing management system also provides their existing subscribers with incentives for sharing media content to the non-subscribers as curated recommendations and gifts, which have better chances of inciting interest from the non-subscribers. These incentives, for example, may include one or more of blockchain based tokens, extension of subscription plans, discounts, early access to premium content, gifts, and coupons that encourage the existing subscribers to recommend more content, thus extending the outreach of the media platform to a significantly larger number on non-subscribers, in turn, augmenting their subscription revenue and subscriber-base.

In addition to the media sharing application, the present content sharing management system may be used in other application areas as well. For example, the content sharing management system allows a subscriber of a trading platform to recommend the trading platform and stocks to a non-subscriber of the trading platform. Subsequently, the content sharing management system provides incentives to the subscriber who recommended the trading platform and stocks to the non-subscriber when the non-subscriber creates an account with the trading platform and/or purchases the recommended stocks. Similarly, in an online shopping application, the content sharing management system allows a person to recommend a product that is available online on an electronic commerce (e-commerce) platform to his or her contact and provides incentives to the person when the person's contact purchases the recommended product via the e-commerce platform.

Further, the content sharing management system allows a person to recommend a ticket or hotel-booking platform to his or her contact and provides incentives to the person when the person's contact books a travel ticket or room via the recommended ticket-booking platform even once. Similarly, the content sharing management system allows a person to recommend pre-booking of movies, sports events, and live events to his or her contact, and provides incentives to the person when the person's contact purchases a ticket for a movie, a sports event, or a live event via a recommended event-booking platform. In an aggregator application, the content sharing management system provides incentives to an aggregator when an end customer performs a business transaction with a local business establishment via the aggregator's platform. Similarly, in a metaverse application, the content sharing management system provides incentives to a user for recommending media content, a product, an item, or a service to other users using metaverse technology.

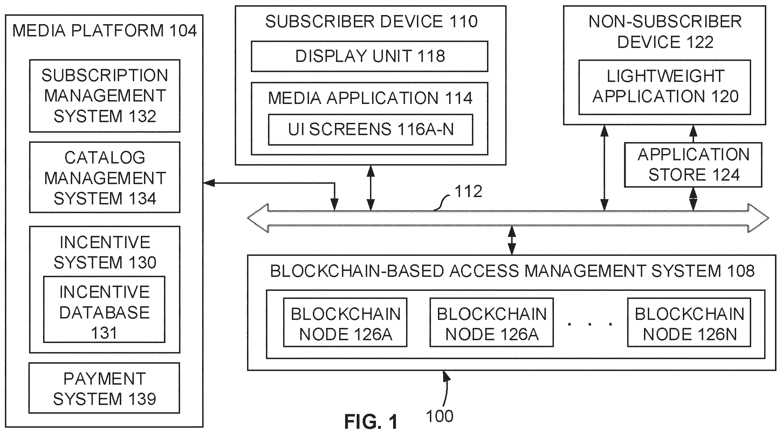

Though the content sharing management system may be used in various application areas, an embodiment of the content sharing management system that provides an innovative content streaming paradigm that is advantageous to the subscriber, the non-subscriber and the OTT platform by allowing a subscriber of an OTT platform to recommend curated media content to a non-subscriber of the OTT platform is described in detail with reference to FIG. 1.

FIG. 1 illustrates a block diagram depicting an exemplary content sharing management system (100) that allows a subscriber of a media platform (104) to share media content available on the media platform (104) with a non-subscriber of the media platform (104). Examples of the media platform (104) include an over-the-top (OTT) platform and a video-on-demand (VOD) platform. Examples of the OTT platform include Netflix, Disney+, Hulu, Amazon's prime video, Hotstar, SonyLIV, and Zee5. Examples of the VOD platform include YouTube and Netflix.

In one embodiment, the content sharing management system (100) includes a blockchain-based access management system (BAMS) (108), which is communicatively coupled to a subscriber device (110) associated with the subscriber via a communications link (112). Examples of the communications link (112) include a content delivery network, a broadcast network, a Wi-Fi network, an Ethernet, and a cellular data network. Examples of the subscriber device (110) that is communicatively coupled to the BAMS (108) include a smartphone, a television, an infotainment system, a desktop, a laptop, a tablet, or any other device that receives and displays media content.

In one embodiment, the subscriber device (110) includes a media application (114) that is associated with the media platform (104). In certain embodiments, the media application (114) residing in the subscriber device (110) includes one or more user interface (UI) screens (116A-N). In one embodiment, the UI screens (116A-N) display a list of media content available on the media platform (104) to the subscriber. In one embodiment, the media application (114) allows the subscriber to create individual profiles for his or her family members such that the family members may access the media application (114) via the individual profiles created for them in the subscriber's account with the media platform (104). In one embodiment, the media application (114) includes a selectable menu item that enables the subscriber to share a recommendation for one or more of the media content available on the media platform (104) with his or her contacts such as family members, friends, and colleagues.

In one embodiment, the selectable menu item corresponds to a media recommendation button that allows the subscriber to share a particular media content as a recommendation to a non-subscriber of the media platform (104). Alternatively, the selectable menu item corresponds to a media gift option that allows the subscriber to pay for a particular media content via immediate or deferred payment, and subsequently share the particular media content as a gift to the non-subscriber of the media platform (104). In one embodiment, when the subscriber selects the media recommendation button for sharing the video as a recommendation to the non-subscriber, the subscriber device (110) displays a set of contacts pre-stored in the subscriber device (110) on an associated display unit (118). The subscriber device (110) then receives a user input from the subscriber including a selection of a particular contact from the set of contacts displayed on the display unit (118). Upon selecting the particular contact, the media application (114) shares a contact number of the particular contact to the BAMS (108). The BAMS (108) subsequently verifies if the contact number is already stored in a subscription management system (132) of the media platform (104). When the contact number is already stored in the subscription management system (132), the BAMS (108) notifies the media application (114) that the particular contact is already a subscriber of the media platform (104). In this example, the media application (114) displays a message to the subscriber that the particular contact is already a subscriber and the video will be shared with the particular contact.

Alternatively, when the contact number of the particular contact is not stored in the subscription management system (132), the BAMS (108) notifies the media application (114) that the particular contact is not a subscriber of the media platform (104). Accordingly, in this example, the media application (114) allows sharing of the video to the particular contact.

In certain embodiments, the media application (114) generates a notification message that includes a short description of the selected video and a link to download a lightweight application (120) that corresponds to a lite version of the media application (114) when the particular contact selected by the subscriber corresponds to a non-subscriber of the media platform (104). Subsequently, the subscriber device (110) transmits the notification message to a non-subscriber device (122) associated with the selected non-subscriber via the communications link (112), for example, via a short message service (SMS), an email, or via a social media platform.

When the non-subscriber selects the notification message received on his or her non-subscriber device (122), the non-subscriber device (122) downloads the lightweight application (120) from an application store (124) using the link included in the notification message. The non-subscriber then inputs login credentials using the non-subscriber device (122) for registering and logging into the lightweight application (120). The non-subscriber device (122) further transmits the login credentials to the BAMS (108).

In one embodiment, the BAMS (108) generates a user account for the non-subscriber based on the login credentials received from the non-subscriber device (122), and stores the user account in all associated blockchain nodes (126AN). In addition, the BAMS (108) adds details including a unique subscriber identifier such as a contact number and/or biometric information of the subscriber received from the subscriber device (110) to the newly generated non-subscriber user account stored in each of the blockchain nodes (126A-N). The BAMS (108) also adds a unique non-subscriber identifier such as a contact number of the non-subscriber and metadata of the recommended video received from the subscriber device (110), and/or biometric information of the non-subscriber received from the non-subscriber device (122) to the newly generated non-subscriber user account.

In one embodiment, for example, the metadata of the video added to the non-subscriber user account and maintained in the BAMS (108) includes a thumbnail of the video, a unique identifier of the video, an access link of the video, and/or a short description of the video. The metadata may further include cast data including details of actors and other cast members, and crew data including details of a director and a producer of the video.

In addition, the BAMS (108) receives a payment receipt from the non-subscriber device (122) when the non-subscriber pays for the video recommended by the subscriber via a payment system (139) associated with the media platform (104). In one embodiment, the payment receipt includes the unique identifier of the content for which a payment is made and a payment status indicating success or failure of the payment. The BAMS (108) extracts the unique identifier of the content and the payment status from the received payment receipt, and adds the extracted unique identifier and payment status to the non-subscriber user account stored in each of the blockchain nodes (126A-N).

In certain embodiments, the BAMS (108) transmits the access link of the video to the non-subscriber device (122) when the BAMS (108) identifies that the payment status extracted from the payment receipt is successful. Subsequently, the non-subscriber may select the access link received by his or her non-subscriber device (122) to watch the video, which in turn, transmits a request to the media platform (104) for streaming the video to the non-subscriber device (122).

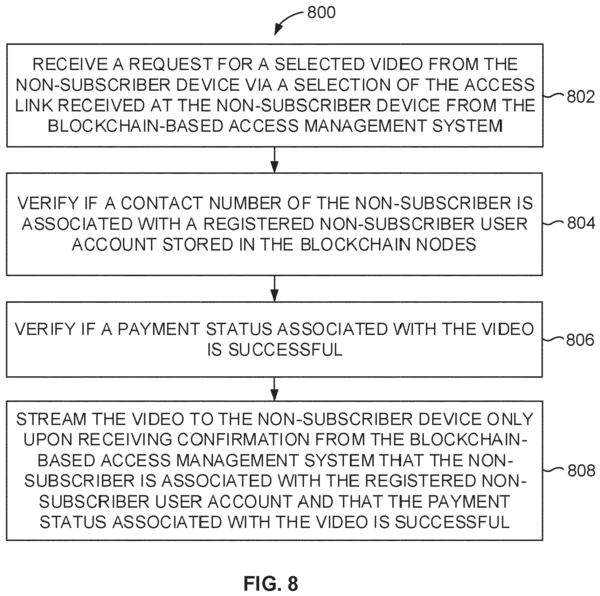

Subsequently, the media platform (104) transmits a first verification request to the BAMS (108) to verify if the non-subscriber has a user account with the BAMS (108). In addition, the media platform (104) transmits a second verification request to the BAMS (108) to verify if the payment status that is associated with the video and that is stored in the non-subscriber user account is successful. Upon receiving confirmation on the non-subscriber having a user account and the payment status being successful, the media platform (104) streams the video to the non-subscriber device (122) via the communications link (112), as described in further detail with reference to FIG. 8.

In certain embodiments, when the subscriber selects the media gift option for sharing the video as the gift to a non-subscriber, the subscriber device (110) displays the set of contacts pre-stored in the subscriber device (110) for enabling the subscriber to select the non-subscriber to whom the subscriber intends to gift the video. Subsequent to selecting the non-subscriber, in certain embodiments, the media application (114) transmits a request to the payment system (139) that enables rendering of a payment screen on the subscriber device (110) to enable the subscriber to complete a payment for the video. Alternatively, the media application (114) shares an authorization request to the subscriber device (110) for authorizing deferred payment, for example, via inclusion of the payment for the video as an additional line item in the monthly billing. Upon completing the payment or authorization for deferred payment, the subscriber device (110) transmits a set of data including a payment receipt, a unique identifier of the subscriber device (110), a unique identifier of the non-subscriber device (122), and the metadata of the video to the BAMS (108). Examples of the unique identifier of the subscriber device (110) include one or more of an internet protocol (IP) address of the subscriber device (110), a contact number of the subscriber, and a biometric information of the subscriber. Examples of the unique identifier of the non-subscriber device (122) include one or more of the IP address of the non-subscriber device (122), a contact number of the non-subscriber, and a biometric information of the non-subscriber. However, for the sake of simplicity, the unique identifier of the subscriber device (110) and the unique identifier of the non-subscriber device (122) are subsequently described to be the contact number of the subscriber and the contact number of the non-subscriber, respectively.

The BAMS (108) then generates a user account for the non-subscriber and stores the non-subscriber user account in each of the blockchain nodes (126A-N). Further, the BAMS (108) adds the set of data received from the subscriber device (110) to the non-subscriber user account maintained in each of the blockchain nodes (126A-N). Subsequently, the BAMS (108) transmits a confirmation message to the subscriber device (110) that confirms creation of the user account for the non-subscriber. Upon receiving the confirmation message, the subscriber device (110) transmits a gift notification to the non-subscriber device (122) via the communications link (112), for example, via SMS, email, or a social media platform. In one embodiment, the gift notification includes a link to download the lightweight application (120), an access link to the gifted video, a shot description of the gifted video, and details of the subscriber such as a name and a contact number of the subscriber who gifted the video to the non-subscriber.

In one embodiment, the non-subscriber device (122) downloads the lightweight application (120) from the application store (124) using the link included in the gift notification. Further, the lightweight application (120) displays a message on the non-subscriber device (122) to setup login credentials for signing up into and registering the non-subscriber user account with the BAMS (108) using the lightweight application (120). Subsequently, the lightweight application (120) shares the registered login credentials with the BAMS (108).

Further, when the non-subscriber selects the access link included in the gift notification, the lightweight application (120) downloaded to the non-subscriber device (122) transmits a request to the media platform (104) for streaming the video. Subsequently, the media platform (104) streams the video to the non-subscriber device (122) post successfully verifying registration information of the non-subscriber stored in the BAMS (108) and a status of the payment made for the video by the subscriber.

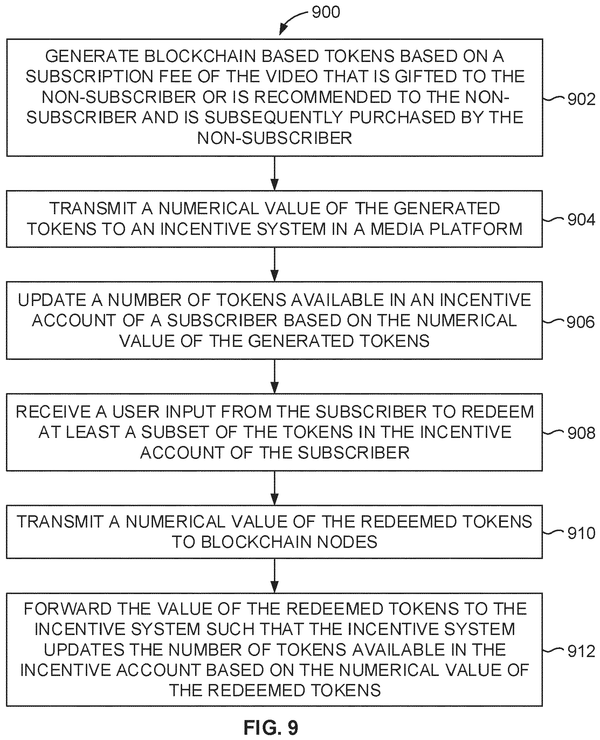

In certain embodiments, the media platform (104) includes an incentive system (130) that provides one or more types of incentives to the subscriber in return for sharing media content with non-subscribers of the media platform (104). Examples of the incentives include blockchain based tokens, extension of a current subscription plan for an additional period of time, gift vouchers, coupons, and monetary discounts on a next renewal cycle. Further, the incentive system (130) adds the incentives, for example blockchain based tokens provided to the subscriber, to an incentive account of the subscriber that is stored in an associated incentive database (131), as described in detail with reference to FIG. 9.

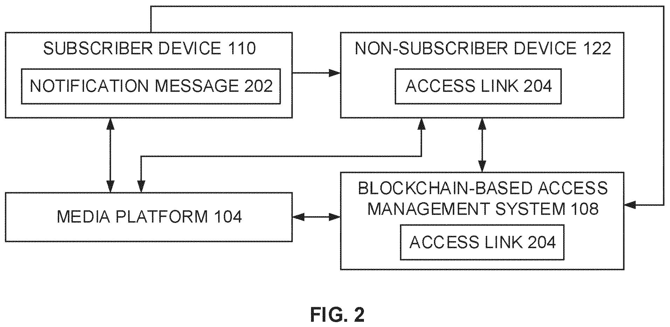

Thus, the content sharing management system (100) enables the subscriber to share the media content available on the media platform (104) to a non-subscriber either as the recommendation or as the gift. An exemplary block diagram depicting steps for sharing a particular media content as a recommendation from the subscriber device (110) to the non-subscriber device (122) is described subsequently with reference to FIG. 2.

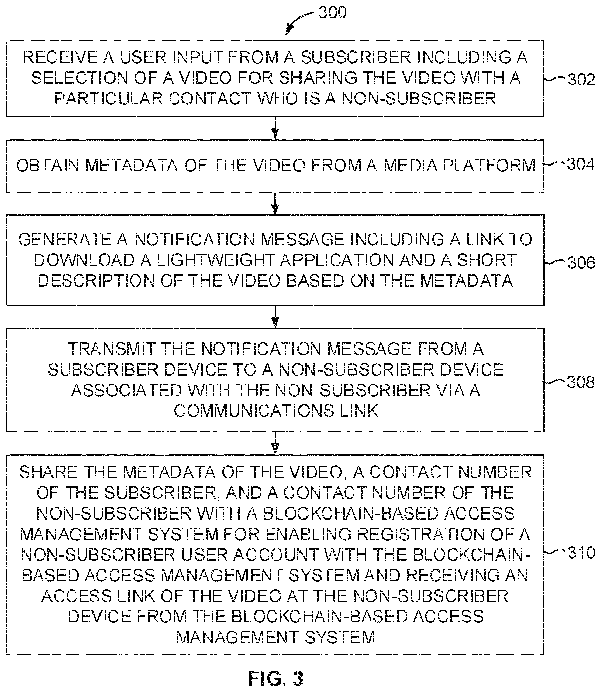

FIG. 2 illustrates a block diagram depicting exemplary steps for sharing a particular media content as a recommendation from the subscriber device (110) to the non-subscriber device (122). Specifically, the subscriber device (110) generates a notification message (202) that includes a recommendation for a media content, and shares the notification message (202) to a non-subscriber device (122). An exemplary method by which the subscriber device (110) generates and transmits the notification message (202) to the non-subscriber device (122) is described in detail with reference to FIG. 3.

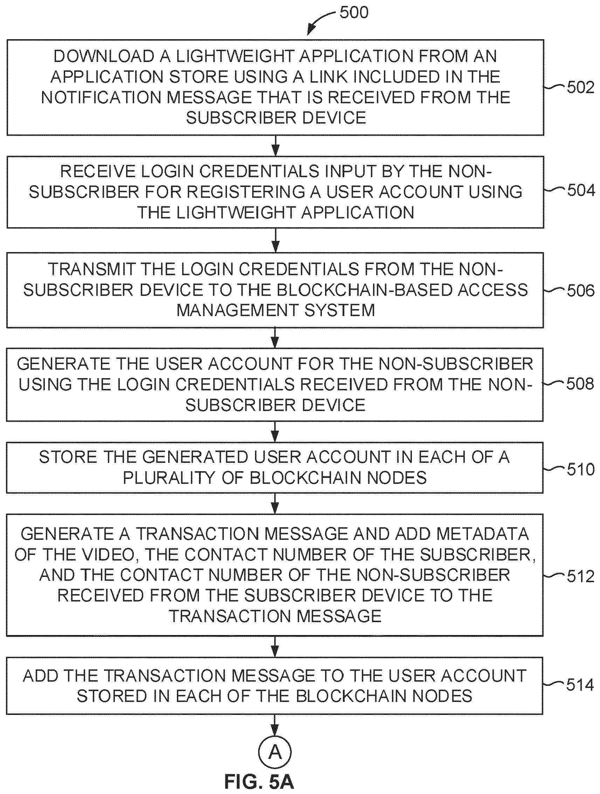

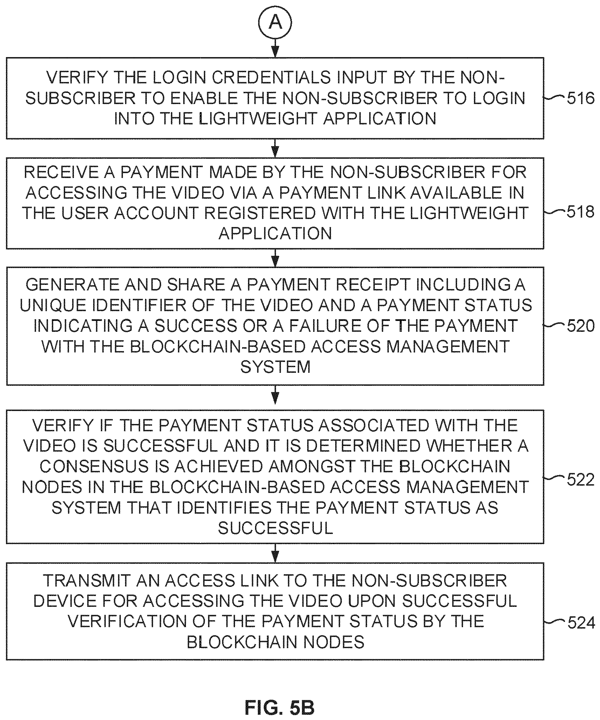

Subsequently, the non-subscriber device (122) registers the non-subscriber user account with the BAMS (108) and receives an access link (204) associated with the recommended media content from the BAMS (108). An exemplary method by which the non-subscriber device (122) interacts with the BAMS (108) to receive the access link (204) from the BAMS (108) is described in detail with reference to FIGS. 5A-B.

In one embodiment, the BAMS (108) then interacts with the media platform (104) for enabling the media platform (104) to stream the recommended media content to the non-subscriber device (122). An exemplary method by which the BAMS (108) interacts with the media platform (104) for enabling the media platform (104) to stream the recommended media content to the non-subscriber device (122) is described in detail with reference to FIG. 8.

As noted previously, FIG. 3 illustrates a flow diagram depicting an exemplary method (300) for generating and transmitting a notification message from the subscriber device (110) to the non-subscriber device (122). The order in which the exemplary method (300) is described is not intended to be construed as a limitation, and any number of the described blocks may be combined in any order to implement the exemplary method disclosed herein, or an equivalent alternative method. Additionally, certain blocks may be deleted from the exemplary method or augmented by additional blocks with added functionality without departing from the claimed scope of the subject matter described herein.

At step (302), the subscriber device (110) receives a user input from the subscriber including a selection of a video for sharing the video with a particular contact of the subscriber who is a non-subscriber. Specifically, the media application (114) displays a plurality of videos that are available on the media platform (104) on one or more associated UI screens (116A-N). When the subscriber selects a video from the plurality of videos and subsequently selects a media share button provided on a UI screen (116A), the subscriber device (110) displays a set of contacts that are pre-stored in and/or accessible via the subscriber device (110).

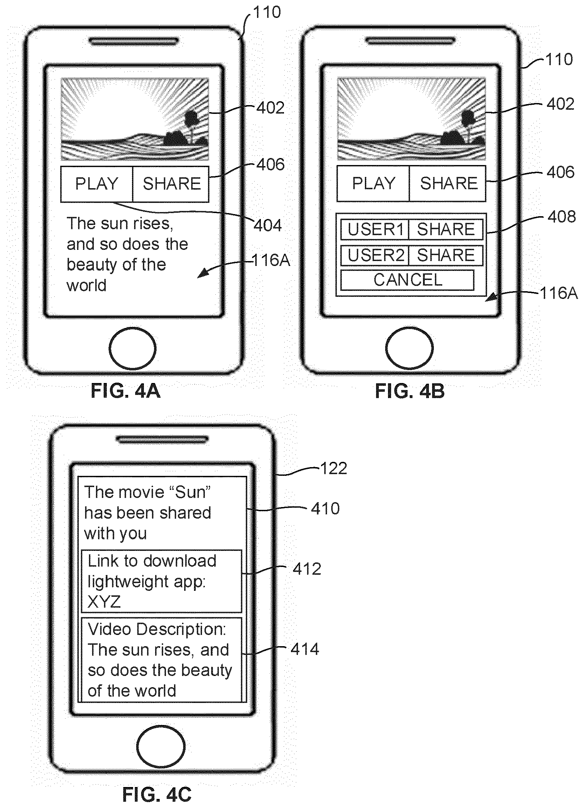

For example, FIG. 4A illustrates a user interface screen (116A) of the media application (114) depicting an exemplary video (402) that is selected from the plurality of videos by the subscriber. Further, the user interface screen (116A) includes a play option (404) for playing the video (402) and a share option (406) for sharing the video (402) as the recommendation with the non-subscriber. When the subscriber selects the share option (406), the media application (114) displays a set of contacts (408) that are pre-stored in the subscriber device (110) on a display screen of the subscriber device (110), as depicted in FIG. 4B.

The subscriber device (110) then allows the subscriber to select a particular contact from the set of contacts (408) to whom the subscriber intends to share the video (402) as the recommendation. In certain embodiments, the media application (114) displays the set of contacts (408) including an indication on the UI screen (116A) that identifies each of the contacts (408) as either subscribers or non-subscribers of the media platform (104) to facilitate selection of the particular contact. In one embodiment, the particular contact selected by the subscriber may correspond to a non-subscriber of the media platform (104).

At step (304), the subscriber device (110) obtains metadata of the video (402) from the media platform (104). Specifically, in one embodiment, the subscriber device (110) transmits a request to the subscription management system (SMS) (132) in the media platform (104) to obtain the metadata of the video (402) that is selected by the subscriber for sharing with the non-subscriber. The SMS (132) then fetches the metadata, for example, from an associated catalog management system (CMS) (134) in the media platform (104) and transmits the metadata to the subscriber device (110) via the communications link (112). As noted previously, the metadata of the video (402) received from the SMS (132) may include one or more of a thumbnail of the video (402), a unique identifier of the video (402), an access link of the video (402), a short description of the video (402), and cast and crew data associated with the video (402).

At step (306), the media application (114) generates a notification message, for example, including a link to download the lightweight application (120) and the short description of the video (402) based on the metadata of the video (402) received from the SMS (132). At step (308), the subscriber device (110) transmits the notification message to the non-subscriber device (122) associated with the non-subscriber via the communications link (112), for example, via an SMS, an email, or a social media platform. For example, FIG. 4C illustrates a user interface view depicting an exemplary notification message (410) including a link (412) to download the lightweight application (120) and a short description (414) of the video (402) that is received from the subscriber device (110) by the non-subscriber device (122). Additionally, at step (310), the subscriber device (110) shares the metadata of the video (402) that is recommended to the non-subscriber, a contact number of the subscriber, and a contact number of the non-subscriber with the BAMS (108) for enabling registration of a non-subscriber user account with the BAMS (108) and receiving an access link (204) associated with the recommended media content at the non-subscriber device (122) from the BAMS (108).

In particular, FIGS. 5A-B illustrate a flow diagram depicting an exemplary method (500) for receiving the access link of the video (402) from the BAMS (108) by the non-subscriber device (122). At step (502), the non-subscriber device (122) downloads the lightweight application (120) from the application store (124) using the link (412) included in the notification message (410) that is received from the subscriber device (110). At step (504), the non-subscriber device (122) receives login credentials input by the non-subscriber for registering a user account using the lightweight application (120). In one embodiment, the login credentials input by the non-subscriber includes a username that corresponds to a username, the contact number of the non-subscriber, and a password.

At step (506), the non-subscriber device (122) transmits the login credentials to the BAMS (108). Subsequently, at step (508), the BAMS (108) generates the user account for the non-subscriber using the login credentials received from the non-subscriber device (122). In one embodiment, the BAMS (108) similarly generates user accounts for a plurality of non-subscribers irrespective of whether they end up purchasing or not purchasing videos recommended by subscribers. Generating the non-subscriber user accounts and capturing if payments are made for recommended videos as part of the non-subscriber user accounts enables the BAMS (108) to analyze how many of the recommended videos are actually purchased by non-subscribers and how many of the recommended videos are not purchased by the non-subscribers. Further, at step (510), the BAMS (108) stores the generated non-subscriber user account in each of the associated blockchain nodes (126A-N).

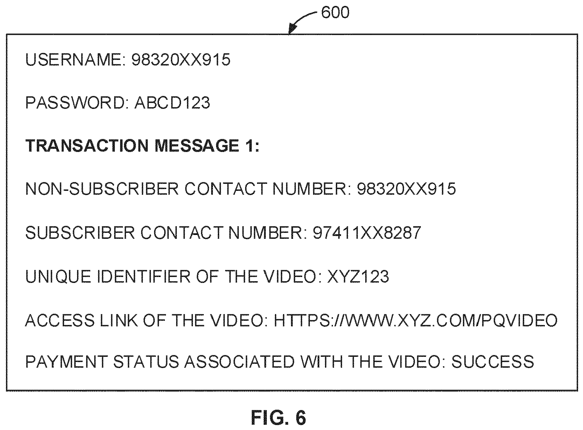

Additionally, at step (512), the BAMS (108) generates a transaction message and adds the metadata of the video (402), the contact number of the subscriber, and the contact number of the non-subscriber received from the subscriber device (110) to the transaction message. Further, at step (514), the BAMS (108) adds the transaction message to the non-subscriber user account stored in each of the associated blockchain nodes (126A-N). For example, FIG. 6 illustrates an exemplary transaction message (600) that is added to an exemplary non-subscriber user account stored in each of the blockchain nodes (126A-N).

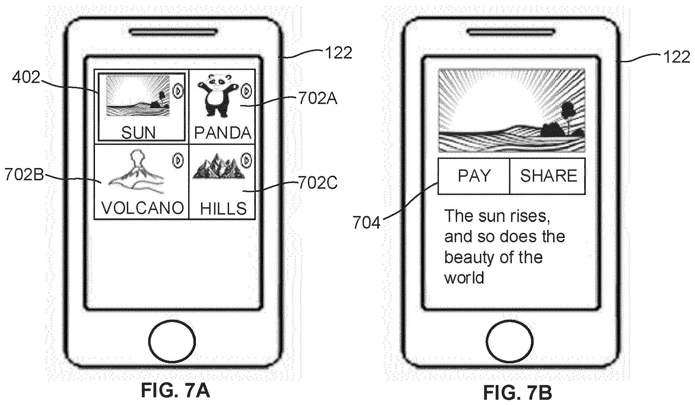

Further, at step (516), the non-subscriber device (122) verifies the login credentials input by the non-subscriber to enable the non-subscriber to login into the lightweight application (120). In one embodiment, upon logging into the lightweight application (120), the lightweight application (120) displays the video (402) that is shared as the recommendation by the subscriber and a list of other media content (702A-C) available on the media platform (104) in the associated UI screen, as depicted in FIG. 7A. When the non-subscriber attempts to play a particular media content selected from the list of other media content (702A-C), in one embodiment, the lightweight application (120) displays details of an annual or monthly subscription plan in order to enable the non-subscriber to purchase the subscription plan and to become a full-time subscriber of the media platform (104). Alternatively, when the non-subscriber selects the video (402) that is recommended by the subscriber, the lightweight application (120) renders the short description (414) of the video (402) included in the notification message (410), and provides a payment link (704) generated by the payment system (139), as depicted in FIG. 7B for enabling the non-subscriber to pay only for the video (402) that is recommended by the subscriber.

At step (518), the lightweight application (120) receives a payment made for accessing the video (402) by the non-subscriber via the payment link (704) available in the non-subscriber user account registered with the lightweight application (120). At step (520), the non-subscriber device (122) generates and shares a payment receipt including the unique identifier of the video (402) and a payment status indicating a success or a failure of the payment with the BAMS (108).

Subsequently, the BAMS (108) identifies a particular transaction message, for example the transaction message (600) of FIG. 6, that resides in the non-subscriber user account and that includes a unique identifier corresponding to the unique identifier of the video (402) included in the payment receipt. The BAMS (108) then adds the payment status that is extracted from the payment receipt to the transaction message (600) residing in the non-subscriber user account.

At step (522), each of the blockchain nodes (126A-N) verifies if the payment status associated with the selected video (402) is successful and it is determined whether a consensus is achieved amongst the blockchain nodes (126A-N) in the BAMS (108) that identifies the payment status as successful. At step (524), the BAMS (108) transmits the access link to the non-subscriber device (122) for accessing the video (402) upon successful verification of the payment status by the blockchain nodes (126A-N).

In certain embodiments, the access link that is shared with the non-subscriber device (122) is a secured access link that implements a digital rights management (DRM) technique to ensure that only the non-subscriber who made the payment for the video (402) can access the video (402) using the access link. An exemplary method (800) for allowing only the non-subscriber to access the video (402) using the access link is described subsequently in greater detail with reference to FIG. 8.

Particularly, at step (802), the media platform (104) receives a request for the video (402) along with a contact number of the non-subscriber from the non-subscriber device (122) via a selection of the access link received at the non-subscriber device (122) from the BAMS (108).

At step (804), the media platform (104) shares the contact number of the non-subscriber with the BAMS (108) to verify if the contact number is associated with a registered non-subscriber user account stored in the blockchain nodes (126AN). Specifically, the BAMS (108) verifies if the contact number of the non-subscriber device is tagged to or associated with any of a plurality of registered non-subscriber user accounts stored in the blockchain nodes (126A-N). Further, the BAMS (108) provides a first confirmation to the media platform (104) that the non-subscriber is a valid user registered with the BAMS (108) when any one of the registered non-subscriber user accounts stored in the blockchain nodes (126A-N) is tagged with the contact number of the non-subscriber device (122). Alternatively, the BAMS (108) transmits a response to the media platform (104) that the non-subscriber is not a valid registered user when the BAMS (108) identifies that the contact number of the non-subscriber is not tagged to or associated with any of the registered non-subscriber user accounts stored in the blockchain nodes (126A-N).

Subsequently, at step (806), the BAMS (108) verifies if the payment status associated with the requested video (402) and that is stored in the user account associated with the non-subscriber is successful. Specifically, the BAMS (108) verifies if the payment status stored in a specific registered non-subscriber user account that is tagged with the contact number of the non-subscriber is successful. In certain embodiments, the BAMS (108) provides a second confirmation to the media platform (104) that the payment status is successful when the BAMS (108) identifies that the payment status that is associated with the video (402) and that is stored in the specific non-subscriber user account is successful. At step (808), the media platform (104) streams the video (402) to the non-subscriber device (122) only upon receiving confirmation from the BAMS (108) that the non-subscriber is associated with the registered non-subscriber user account and the payment status associated with the video (402) is successful.

In certain embodiments, the content sharing management system (100) prevents anyone other than the registered non-subscriber from accessing the video (402) using the shared access link. Specifically, if the non-subscriber further shares the access link of the video (402) with his or her friends and family members, who are not subscribers of the media platform (104), the content sharing management system (100) verifies associated user identifiers to prevent unregistered non-subscribers from accessing the video (402). For example, a friend of the registered non-subscriber may be able to generate a new non-subscriber user account by downloading the lightweight application (120) to the friend's user device using the access link and request for the video (402). Even in such a scenario, the friend's user device would transmit a request for the video (402) along with an associated contact number and device identifier (ID) to the media platform (104). Upon receiving the request and the device ID from the friend's user device, the media platform (104) shares a first verification request with the BAMS (108) to verify if the contact number and device ID are associated with any user account stored in the blockchain nodes (126A-N). In this example, the BAMS (108) would identify that the contact number and device ID are not associated with any of user accounts stored in the blockchain nodes (126A-N) as the user accounts include only contact numbers of registered non-subscribers and do not include contact numbers or device IDs associated with unregistered non-subscriber devices. Accordingly, the BAMS (108) would transmit a response to the media platform (104) that the friend of the non-subscriber who requested the video (402) is not a valid or registered user. The media platform (104), therefore, prevents streaming of the video (402) to the friend's user device.

Additionally, the BAMS (108) further checks the friend's user account to verify if a payment is made for the video (402) and if a status of the payment is successful. In this example, the BAMS (108) may not find any payment details related to the video (402) in the user account, as the friend of the registered non-subscriber has not made any payment for the video (402). Accordingly, in this example, the BAMS (108) transmits a response to the media platform (104) indicating that the payment details associated with the video (402) are not identified in the user account. The media platform (104) then prevents streaming of the video (402) to the friend's user device. In certain other embodiments, the content sharing management system (100) allows creation of only one non-subscriber user account per access link shared by the subscriber to prevent misuse.

In certain further embodiments, the content sharing management system (100) allows the subscriber to share the video (402) as a gift to the non-subscriber, as noted previously. For gifting the video (402), the subscriber may select the video (402) to be gifted and a media gift option from the UI screen (116A) of the media application (114). Upon selecting the media gift option, the subscriber device (110) displays the set of contacts (408) stored in the subscriber device (110) for enabling the subscriber to select a non-subscriber to whom the video (402) has to be gifted. Subsequent to selection of the non-subscriber, the media application (114) provides a payment link, generated by the associated payment system (139), on an associated UI screen to enable the subscriber to make a payment for the video (402).

Upon completing the payment for the video (402), the subscriber device (110) requests and receives the metadata of the video (402) from the subscription management system (132). Subsequently, the subscriber device (110) generates a transaction message and adds the metadata of the video (402), a contact number of the subscriber, a contact number of the non-subscriber, and a payment status indicating a success or a failure of the payment made by the subscriber for the video (402). The subscriber device (110) then shares the transaction message to the BAMS (108).

Subsequently, the BAMS (108) generates a user account for the non-subscriber based on the contact number of the non-subscriber included in the transaction message. Further, the BAMS (108) stores the non-subscriber user account in each of the associated blockchain nodes (126A-N). Subsequently, each of the blockchain nodes (126A-N) verifies if the payment status included in the transaction message is successful. Upon achieving a consensus amongst the blockchain nodes (126A-N) that the payment status is successful, the BAMS (108) generates and transmits an acknowledgement message to the subscriber device (110) that confirms creation of the user account for the non-subscriber.

Upon receiving the acknowledgment message from the BAMS (108), the media application (114) residing in the subscriber device (110) generates and transmits a gift notification to the non-subscriber device (122) via the communications link (112), for example, via an SMS, an email, or a social media platform. The gift notification, thus transmitted to the non-subscriber device (122), includes a link to download the lightweight application (120), an access link of the video (402) gifted by the subscriber, a short description of the video (402), and details of the subscriber such as a name and a contact number of the subscriber who gifted the video (402) to the non-subscriber.

In certain embodiments, the non-subscriber device (122) enables the non-subscriber to download the lightweight application (120) from the application store (124) using the link included in the gift notification. Further, the non-subscriber device (122) enables the non-subscriber to sign up into the lightweight application (120), for example, using a username that corresponds to the non-subscriber's contact number and a password that is set by the non-subscriber. Upon signing up into the lightweight application (120) and selecting the access link of the video (402), the lightweight application (120) shares the contact number of the non-subscriber with the media platform (104).

The media platform (104) then requests a first confirmation from the BAMS (108) that the contact number of the non-subscriber is associated with a particular registered user account stored in the blockchain nodes (126A-N). Further, the media platform (104) requests a second confirmation from the BAMS (108) that the payment status that is associated with the gifted video (402) and that is stored in the user account is successful. Subsequently, the media platform (104) streams the gifted video (402) to the non-subscriber device (122) only upon receiving both the first confirmation and the second confirmation from the BAMS (108).

In certain embodiments, the media platform (104) provides incentives, for example, blockchain based tokens to the subscriber for sharing the video (402) as a recommendation or as a gift to a non-subscriber. FIG. 9 illustrates an exemplary method (900) for recording certain exemplary incentives issued to the subscriber by the incentive system (130) associated with the media platform (104) for sharing one or more videos as recommendations or as gifts to one or more non-subscribers.

Particularly, at step (902), the blockchain nodes (126A-N) generate blockchain-based tokens based on a subscription fee of the video (402) that is gifted to the non-subscriber or is recommended to the non-subscriber and is subsequently purchased by the non-subscriber. Examples of the generated blockchain based tokens include Ethereum-based tokens and non-fungible tokens. At step (904), the BAMS (108) transmits a numerical value of the generated tokens to the incentive system (130) in the media platform (104). In one embodiment, the incentive system (130) includes an associated incentive database (131) that stores incentive accounts associated with a plurality of subscribers of the media platform (104). At step (906), the incentive system (130) updates a number of tokens available in an incentive account of the subscriber based on the numerical value of the generated tokens. In one embodiment, the subscriber may obtain information related to a number of tokens left in his or her incentive account at any point of time via the media application (114) installed in the subscriber device (110). At step (908), the media application (114) receives a user input from the subscriber to redeem at least a subset of the tokens in the incentive account of the subscriber.

For example, the media application (114) receives the user input from the subscriber to use the tokens left in the incentive account to extend his or her current subscription plan for an additional period of time. In another example, the media application (114) receives the user input from the subscriber to use a subset of the tokens left in the incentive account to purchase products from electronic commerce platforms.

At step (910), the media application (114) transmits a numerical value of the redeemed tokens to the blockchain nodes (126A-N). At step (912), the BAMS (108) then forwards the value of the redeemed tokens to the incentive system (130) such that the incentive system (130) updates the number of tokens available in the incentive account based on the numerical value of the redeemed tokens. Thus, the content sharing management system (100) suitably incentivizes subscribers of the media platform (104) for recommending content to non-subscribers securely, thereby extending the outreach of the media platform (104) to a significantly larger number on non-subscribers, in turn, augmenting their subscription revenue and subscriber-base. In certain embodiments, the media platform (104) may also transmit a promotional message to the contact number of the non-subscriber device (122). Such promotional message includes details of one or more of an incentive, an offer, and a discount that the non-subscriber would receive upon upgrading himself or herself as a full-time subscriber of the media platform (104).

Additionally, in one embodiment, the content sharing management system (100) provides only a limited video access to the non-subscriber to limit consumption of the video (402) that is either received as a gift from the subscriber or purchased by the non-subscriber itself. To that end, each of the blockchain nodes (126A-N) in the BAMS (108) stores smart contracts associated with different media content available on the media platform (104). The smart contracts are computer protocols that define contractual terms and conditions associated with usage of the media content. For example, a smart contract defines one or more geographical regions where streaming of the video (402) is allowed, a number of times the non-subscriber is allowed to watch the video (402), and a subscription validity that defines a time period for which purchasing of or access to the video (402) is valid.

For example, a subscriber may select the particular video (402) displayed on a Ul screen (116A) of the media application (114) and further select a non-subscriber to whom the subscriber intends to gift the video (402) from the contacts (408) stored in the subscriber device (110). In this example, the subscriber device (110) transmits a unique identifier of the selected video (402) and a contact number of the selected non-subscriber to the BAMS (108). Subsequently, each of the blockchain nodes (126A-N) in the BAMS (108) determines a smart contact that is associated with the video (402) and that is stored in an associated database based on the unique identifier of the video (402) received from the subscriber device (110). Further, from the smart contact, the blockchain nodes (126A-N) determine one or more geographical regions where streaming of the video (402) is allowed. For example, from the smart contact of the video (402), the blockchain nodes (126A-N) determine that streaming of the video (402) is allowed only in India. In this example, the blockchain nodes (126A-N) verify if the non-subscriber to whom the subscriber intends to gift the video (402) belongs to Indian geography based on a country code included in the contact number of the non-subscriber.

Subsequently, the BAMS (108) transmits a compliance success message to the subscriber device (110) when the blockchain nodes (126A-N) successfully verify that the non-subscriber belongs to Indian geography. The media application (114) residing in the subscriber device (110) then presents a payment link or option in the associated UI screen (116A) to allow the subscriber to pay for the video (402) and share the video (402) as the gift to the non-subscriber. The BAMS (108) also transmits the compliance success message to the media platform (104) for streaming the gifted video (402) from the media platform (104) to the non-subscriber device (122) when the non-subscriber selects an access link associated with the gifted video (402). Alternatively, when the blockchain nodes (126A-N) identify that the non-subscriber to whom the subscriber intends to gift the video (402) belongs to a different geography, for example, a European geography, the BAMS (108) transmits a compliance failure message to the subscriber device (100). Subsequently, in this example, the media application (114) residing in the subscriber device (110) renders a message to the subscriber that "The selected non-subscriber belongs to a geography where streaming of the selected video (402) is not allowed." Further, the media application (114) generates and presents the subscriber with a list of videos that are allowed to be streamed in the European geography on the display unit (118) of the subscriber device (110), and prompts the subscriber to consider gifting one of the list of videos to the non-subscriber.

In certain embodiments, the smart contract of the video (402) includes a record of a date of purchase of the video (402) by the subscriber and a particular period for which the non-subscriber can access the gifted video (402). When the particular period is expired, the BAMS (108) transmits an expiry notification to the media platform (104) to prevent the media platform (104) from subsequently streaming the gifted video (402) to the non-subscriber device (122).

In one embodiment, the media platform (104) reports every single instance of streaming of the video (402) to the non-subscriber device (122) to the BAMS (108). Thus, the BAMS (108) continuously monitors a number of times that the video (402) is streamed to the non-subscriber device (122) from the media platform (104). When the BAMS (108) identifies that the number of times that the video (402) is streamed to the non-subscriber device (122) is equivalent to a maximum number of streaming instances allowed per the smart contact, the BAMS (108) requests the media platform (104) to stop further streaming of the video (402) to the non-subscriber device (122).

In one embodiment, the BAMS (108) is integrated and is implemented as part of the media platform (104). Alternatively, the BAMS (108) is implemented as a standalone system that simultaneously interacts with a plurality of media platforms and with a plurality of associated subscriber and non-subscriber devices for enabling subscribers to share media content to non-subscribers, incentivizing subscribers, and for allowing only valid registered non-subscribers to consume the shared media content.

As noted previously, the present content sharing management system (100) allows the non-subscribers to pay for and consume only the recommended media content rather than needing to pay a hefty monthly or yearly subscription fee, thus enabling significant cost savings. Further, the content sharing managing system (100) increases a subscription revenue of the media platform (104) with an increase in a number of non-subscribers consuming media content available on the media platform. Further, the system (100) provides incentives to subscribers of the media platform (104) for recommending content to nonsubscribers, thus extending the outreach of the media platform (104) to a significantly larger number of non-subscribers, in turn, augmenting their subscription revenue and subscriber-base. The content sharing management system (100) also enables the media platform (104) to provide incentives and/or offers to non-subscribers in order to incite the non-subscribers to upgrade themselves as full-time subscribers, which further increases the subscription revenue of the media platform.

It may be noted that various components of the system (100) such as the BAMS (108) and associated blockchain nodes (126A-N), subscription management system (132), catalog management system (134), and incentive system (130) may be implemented by suitable code on a processor-based system, such as a general-purpose or a special-purpose computer. Accordingly, the BAMS (108), blockchain nodes (126A-N), subscription management system (132), catalog management system (134), and incentive system (130), for example, may include one or more general-purpose processors, specialized processors, graphical processing units, microprocessors, programming logic arrays, field programming gate arrays, integrated circuits, systems on chips, and/or other suitable computing devices.

Although specific features of various embodiments of the present systems and methods may be shown in and/or described with respect to some drawings and not in others, this is for convenience only. It is to be understood that the described features, structures, and/or characteristics may be combined and/or used interchangeably in any suitable manner in the various embodiments shown in the different figures.

While only certain features of the present systems and methods have been illustrated and described herein, many modifications and changes will occur to those skilled in the art. It is, therefore, to be understood that the appended claims are intended to cover all such modifications and changes.

**LIST OF NUMERAL REFERENCES:**

| | |
|---|---|
| 100 Content sharing management system | 202, 410 Notification message |
| 104 Media platform | 204 Secured access link |
| 108 Blockchain-based access management system | 300-310 Steps of a method for generating and transmitting a notification message including a video recommendation to a non-subscriber device |
| 110 Subscriber device | 402, 702A-C Videos |
| 112 Communications link | 404 Video play option |
| 114 Media application | 406 Video share option |
| 116A-N User interface screens | 408 A set of subscriber contacts |
| 118 Display unit | 412 Application downloading link |
| 120 Lightweight application | 414 Short description of a video |
| 122 Non-subscriber device | 500-524 Steps of a method for receiving an access link of the video by the non-subscriber device from a blockchain-based access management system |
| 124 Application store | 600 Transaction message |
| 126A-N Blockchain nodes | 704 Payment link |
| 130 Incentive system | 800-808 Steps of a method for allowing a non-subscriber to access the video |
| 131 Incentive database | 900-912 Steps of a method for providing incentives to a subscriber for sharing videos to non-subscribers |
| 132 Subscriber management system | |
| 134 Catalog management system | |
| 139 Payment system | |

## Claims

1. A method for sharing media content, comprising:
receiving metadata of the media content, to be shared from a subscriber device (110) belonging to a subscriber of a media platform (104) to a non-subscriber device (122) belonging to a non-subscriber of the media platform (104), by a blockchain-based access management system (108), wherein the received metadata of the media content comprises a secured access link of the media content;
generating a non-subscriber user account for the non-subscriber and storing the generated non-subscriber user account in each of a plurality of blockchain nodes (126A-N), and adding the received metadata comprising the secured access link of the media content to the generated non-subscriber user account;
receiving a payment receipt by the blockchain-based access management system (108) from one of the subscriber device (110) and the non-subscriber device (122), wherein the received payment receipt indicates a success or failure of a payment made by one of the subscriber and the non-subscriber for the media content;
sharing the secured access link of the media content to the non-subscriber device (122) only when the plurality of blockchain nodes (126A-N) verify that the payment status associated with the media content is successful;
providing a first confirmation from the blockchain-based access management system (108) to the media platform (104) that the non-subscriber is a valid user registered with the blockchain-based access management system (108) when the non-subscriber attempts to access the media content via the secured access link shared to the non-subscriber device (122);
providing a second confirmation from the blockchain-based access management system (108) to the media platform (104) that the payment status that is associated with the media content and that is stored in the non-subscriber user account is successful; and
streaming the media content from the media platform (104) to the non-subscriber device (122) only upon receiving both the first confirmation and the second confirmation from the blockchain-based access management system (108).

2. The method as claimed in claim 1, wherein sharing of the media content from the subscriber device (110) to the non-subscriber device (122) comprises sharing of the media content as one or more of a recommendation and a gift.

3. The method as claimed in claim 2, wherein sharing of the media content as the recommendation from the subscriber device (110) to the non-subscriber device (112) comprises:
obtaining the metadata of the media content from a subscriber management system (132) in the media platform (104) by a media application (114) in the subscriber device (110), wherein the metadata of the media content obtained from the subscriber management system (132) comprises one or more of a thumbnail, a unique identifier, the secured access link, a short description, and cast and crew data of the media content;
generating and transmitting a notification message comprising the short description of the media content and a link to download a lightweight application from the subscriber device (110) to the non-subscriber device (122) via a communications link (112), wherein the lightweight application corresponds to a lite version of the media application (114) residing in the subscriber device (110); and
transmitting the metadata of the media content that is shared to the non-subscriber device (122) as the recommendation, a unique identifier of the non-subscriber device (122), a unique identifier of the subscriber device (110) from the subscriber device (110) to the blockchain-based access management system (108).

4. The method as claimed in claim 3, wherein sharing of the media content as the recommendation from the subscriber device (110) to the non-subscriber device (112) comprises:
generating the non-subscriber user account for the non-subscriber with the blockchain-based access management system (108) based on login credentials input by the non-subscriber via the lightweight application downloaded from an application store (124) to the non-subscriber device (122);
storing the generated non-subscriber user account in each of the plurality of blockchain nodes (126A-N) in the blockchain-based access management system (108);
generating a transaction message by the blockchain-based access management system (108), wherein the generated transaction message comprises the metadata of the media content, the unique identifier of the non-subscriber device (122), and the unique identifier of the subscriber device (110);
storing the generated transaction message in the non-subscriber user account generated for the non-subscriber of the media platform (104);
receiving the payment receipt from the non-subscriber device (122) by the blockchain-based access management system (122), wherein the received payment receipt comprises the unique identifier of the media content for which the payment is made by the non-subscriber and a payment status indicating the success or the failure of the payment made by the non-subscriber; and
transmitting the secured access link from the blockchain-based access management system (122) to the non-subscriber device (122) only when one or more of the plurality of blockchain nodes (126A-N) verify the payment status as successful for enabling the non-subscriber to access the media content available on the media platform (104) via the secured access link, wherein the secured access link allows only one non-subscriber who is associated with the non-subscriber device (122), is registered with the blockchain-based access management system (108) and has made the payment for the media content to access the media content using the secured access link.

5. The method as claimed in claim 2, wherein sharing of the media content as the gift from the subscriber device (110) to the non-subscriber device (112) comprises:
providing a payment link, generated by a payment system (139) communicatively coupled to the media platform (104), to the subscriber via a user interface screen of a media application (114) residing in the subscriber device (110) for enabling the subscriber to make the payment for the media content to be shared as the gift to the non-subscriber device (122);
obtaining the metadata of the media content from a subscriber management system (132) in the media platform (104) by the media application (114) in the subscriber device (110) when a payment status of the payment made by the subscriber is successful, wherein the obtained metadata comprises one or more of a thumbnail, a unique identifier, the secured access link, a short description, and cast and crew data of the media content; and
generating and transmitting a transaction message comprising the metadata of the media content, a unique identifier of the non-subscriber device (122), a unique identifier of the subscriber device (110), and the payment status indicating a success of the payment made for the media content by the subscriber from the subscriber device (110) to the blockchain-based access management system (108).

6. The method as claimed in claim 5, wherein sharing of the media content as the gift from the subscriber device (110) to the non-subscriber device (112) comprises:
generating the non-subscriber user account for the non-subscriber with the blockchain-based access management system (108) based on the unique identifier of the non-subscriber device (122) received from the subscriber device (110);
storing the generated non-subscriber user account in each of the plurality of blockchain nodes (126A-N) in the blockchain-based access management system (108);
verifying if the payment status in the transaction message indicating the success of the payment made for the media content by the subscriber by the plurality of blockchain nodes (126A-N) in the blockchain-based access management system (108);
generating and transmitting an acknowledgement message from the blockchain-based access management system (108) to the subscriber device (110) when one or more of the plurality of blockchain nodes (126A-N) verify the payment status as success, wherein the acknowledgement message confirms creation of the non-subscriber user account for the non-subscriber with the blockchain-based access management system (108); and
generating and transmitting a gift notification from the subscriber device (110) to the non-subscriber device (122) via a communications link (112) upon receiving the acknowledgement message from the blockchain-based access management system (108), wherein the gift notification transmitted to the non-subscriber device (122) comprises one or more of a link to download a lightweight application corresponding to a lite version of the media application (114) in the subscriber device (110) and the secured access link of the media content for enabling the non-subscriber to access the media content available on the media platform (104) via the secured access link, wherein the secured access link allows only one non-subscriber who is associated with the non-subscriber device (122), is registered with the blockchain-based access management system (108), and is gifted with the media content to access the media content using the secured access link.

7. The method as claimed in claim 2, wherein sharing of the media content as one or more of the recommendation and the gift from the subscriber device (110) to the non-subscriber device (122) comprises:
transmitting the unique identifier of the non-subscriber device (122) from the non-subscriber device (122) to the media platform (104) when the non-subscriber selects the secured access link of the media content that is received as one or more of the recommendation and the gift from the subscriber device (110);
sharing the unique identifier of the non-subscriber device (122) with the blockchain-based access management system (108) from the media platform (104) to verify if the unique identifier of the non-subscriber device (122) is tagged to any of a plurality of registered non-subscriber user accounts stored in the plurality of blockchain nodes (126A-N);
transmitting the first confirmation to the media platform (104) that the non-subscriber is the valid user registered with the blockchain-based access management system (108) when any one of the registered non-subscriber user accounts is tagged with the unique identifier of the non-subscriber device (122);
verifying if the payment status related to the media content stored in a specific registered non-subscriber user account that is tagged with the contact number of the non-subscriber is successful by the plurality of blockchain nodes (126A-N) in the blockchain-based access management system (108); and
transmitting the second confirmation from the blockchain-based access management system (108) to the media platform (104) that the payment status is successful when one or more of the plurality of blockchain nodes (126A-N) in the blockchain-based access management system (108) identify that the payment status related to the media content stored in the specific non-subscriber account is successful.

8. The method as claimed in claim 2, wherein sharing of the media content as one or more of the recommendation and the gift from the subscriber device (110) to the non-subscriber device (122) comprises:
retrieving a smart contract, associated with the media content, stored in each of the plurality of blockchain nodes (126A-N); and
identifying one or more contractual clauses associated with usage of the media content, wherein the one or more identified contractual clauses define one or more geographical regions where streaming of the media content is allowed, a particular period till which an access to the media content is to be provided to the non-subscriber of the media platform (104), and a number of streaming instances allowed from the media platform (104) to the non-subscriber device (122).

9. The method as claimed in claim 8, wherein sharing of the media content as one or more of the recommendation and the gift from the subscriber device (110) to the non-subscriber device (122) comprises:
identifying a geographical region of the non-subscriber by the plurality of blockchain nodes (126A-N) based on a unique identifier of the non-subscriber device (122) received from the subscriber device (110), wherein the unique identifier of the non-subscriber device (122) corresponds to a contact number of the non-subscriber comprising a country code;
providing a payment link, generated by a payment system (139) communicatively coupled to the media platform (104), to one or more of the subscriber and the non-subscriber for making the payment for the media content only when the geographical region of the non-subscriber corresponds to one of the allowed geographical regions identified from the smart contract;
generating and presenting a list of media content that are allowed to be streamed in the geographical region of the non-subscriber on a display unit (118) of the subscriber device (110) when the geographical region of the non-subscriber is different from the allowed geographical regions identified from the smart contract, wherein the list of media content presented on the display unit (118) enables the non-subscriber to select and share a specific media content from the list of media content to the non-subscriber of the media platform (104);
transmitting the particular period till which the access to the media content is to be provided to the non-subscriber and the maximum number of streaming instances allowed that are identified from the smart contract from the blockchain-based access management system (108) to the media platform (104); and
preventing a subsequent streaming of the media content from the media platform (104) to the non-subscriber device (122) after expiry of the particular period till which the access to the media content is to be provided to the non-subscriber or when a number of times that the media content is streamed to the non-subscriber device (122) is equivalent to the maximum number of streaming instances allowed for the media content.

10. The method as claimed in 2, wherein sharing of the media content as one or more of the recommendation and the gift from the subscriber device (110) to the non-subscriber device (122) comprises:
adding an incentive comprising a particular number of blockchain based tokens to an incentive account of the subscriber that is stored in the media platform (104) for sharing the media content to the non-subscriber, wherein the particular number of blockchain based tokens added to the incentive account is determined based on a subscription fee of the media content that is one of gifted to the non-subscriber and recommended to the non-subscriber and subsequently purchased by the non-subscriber; and
enabling the subscriber to redeem a number of blockchain based tokens remaining in the incentive account via a media application (114) that resides in the subscriber device (110), wherein the media application (114) allows the subscriber to use the blockchain based tokens remaining in the incentive account to one or more of extend a current subscription plan for an additional period of time and purchase a product from an electronic commerce platform.

11. The method as claimed in any of claims 1 to 10, wherein streaming of the media content from the media platform (104) to the non-subscriber device (122) comprises transmitting a promotional message from the media platform (104) to a contact number of the non-subscriber device (122), wherein the promotional message comprises details of one or more of an incentive, an offer, and a discount that the non-subscriber would receive upon upgrading himself or herself as a full-time subscriber of the media platform (104).

12. A content sharing management system (100), comprising:
an incentive system (130) communicatively coupled to one or more of a media platform (104), a payment system (139), and a subscriber device (110) via a communications link (112), wherein the subscriber device (110) comprises a media application (114) that allows a subscriber of the media platform (104) to select a particular media content from a plurality of media content available on the media platform (104) and to subsequently share the selected media content as one or more of a recommendation and a gift to a non-subscriber of the media platform (104), wherein the incentive system (130) provides one or more types of incentives to the subscriber in return for sharing the selected media content with non-subscribers of the media platform (104); and
a blockchain-based access management system (108) that is communicatively coupled to the media platform (104), the payment system (139), and the subscriber device (110) via the communications link (112), wherein the blockchain-based access management system (108) comprises a plurality of blockchain nodes (126A-N) and that:
receives metadata of the selected media content from the subscriber device (110), wherein the received metadata of the selected media content comprises a secured access link of the selected media content;
generates a non-subscriber user account for the non-subscriber and stores the generated non-subscriber user account in each of the plurality of blockchain nodes (126A-N), and adds the received metadata comprising the access link of the selected media content to the generated non-subscriber user account;
receives a payment receipt from one of the subscriber device (110) and a non-subscriber device (122) associated with the non-subscriber of the media platform (104), wherein the received payment receipt indicates a success or failure of a payment made by one of the subscriber and the non-subscriber for the selected media content using the payment system (139);
shares the secured access link of the selected media content to the non-subscriber device (122) only when the plurality of blockchain nodes (126A-N) verify that the payment status associated with the selected media content is successful;
provides a first confirmation to the media platform (104) that the non-subscriber is a valid user registered with the blockchain-based access management system (108) when the non-subscriber attempts to access the selected media content via the secured access link shared to the non-subscriber device (122);
provides a second confirmation to the media platform (104) that the payment status that is associated with the selected media content and that is stored in the non-subscriber user account is successful, wherein the media platform (104) streams the selected media content to the non-subscriber device (122) only upon receiving both the first confirmation and the second confirmation from the blockchain-based access management system (108).; and
enables the media platform (104) to add an incentive to an incentive account of the subscriber stored in the media platform (104) for sharing the selected media content as one or more of the recommendation and the gift to the non-subscriber.

13. The content sharing management system (100) as claimed in claim 12, wherein the blockchain-based access management system (108) is integrated and implemented as part of the media platform (104).

14. The content sharing management system (100) as claimed in claim 12, wherein the blockchain-based access management system (108) is implemented as a standalone system that simultaneously interacts with a plurality of media platforms and with a plurality of associated subscriber and non-subscriber devices for enabling subscribers to share the media content to non-subscribers, incentivizing subscribers, and for allowing only valid registered non-subscribers to consume the shared media content.

15. The content sharing management system (100) as claimed in any of claims 12 to 14, wherein the media platform comprises one or more of an over-the-top platform, a video-on-demand platform, a stock trading platform, an electronic commerce platform, a ticket booking platform, a hotel booking platform, a local business establishment aggregator platform, and a metaverse platform.
